# EUROPEAN PATENT SPECIFICATION

(11) **EP 3 860 773 B1**
(45) Date of publication and mention of the grant of the patent: **01.10.2025**
(21) Application number: 19869820.1
(22) Date of filing: 03.04.2019
(51) Int. Cl.: B63B 59/10, B08B 3/10, A01K 63/10, A01K 61/60

(54) **NET CLEANING DEVICE FOR IN-SITU CLEANING OF A SUBMERGED NET, PROPELLER FOR USE WITH NET CLEANING DEVICE, METHOD AND SYSTEM**
NETZREINIGUNGSVORRICHTUNG ZUR IN-SITU-REINIGUNG EINES UNTERGETAUCHTEN NETZES, PROPELLER ZUR VERWENDUNG MIT EINER NETZREINIGUNGSVORRICHTUNG, VERFAHREN UND SYSTEM
DISPOSITIF DE NETTOYAGE DE FILET POUR LE NETTOYAGE IN SITU D'UN FILET IMMERGÉ, HÉLICE DESTINÉE À ÊTRE UTILISÉE AVEC UN DISPOSITIF DE NETTOYAGE DE FILET, PROCÉDÉ ET SYSTÈME

(30) Priority: 05.10.2018 AU 2018903767; 29.10.2018 AU 2018904092
(43) Date of publication of application: 11.08.2021
(73) Proprietor: Aqua Clean Tas Pty Ltd, Ranelagh TAS 7109 (AU)
(72) Inventor: FORD, Michael, Ranelagh, Tasmania 7109 (AU); FORD, Timothy, Ranelagh, Tasmania 7109 (AU)
(74) Representative: Handsome I.P. Ltd
(86) International application number: PCT/AU2019/050288
(87) International publication number: WO 2020/069556

(56) References cited:
- WO-A1-2013/047061
- WO-A1-2016/183274
- WO-A1-2016/183274
- WO-A1-2018/080315
- WO-A1-93/00175
- US-A- 4 682 558
- US-A1- 2011 314 617

## Description

### Field of the invention

The present invention relates to a net cleaning device for in-situ cleaning of a submerged net, a propeller for use with a net cleaning device, a method of cleaning an in-situ submerged net and a system for cleaning a submerged net in-situ.

### Background

Submerged nets for use in aquaculture, in particular pens for use in salmon, barramundi or kingfish farming, are required to be kept clean to prevent damage to the net and to ensure the health of the fish within the pen. To keep nets clean, a regular cleaning schedule is required as marine growth, such as muscles and oysters for example, can occur quite rapidly and develop into 10-inch clumps before long if left unchecked. For example, mussel spouts can occur within 14 days so without a regular cleaning schedule it doesn't take long for marine growth to get out of hand. As such, there is a need to quickly and efficiently clean submerged nets so that a regular cleaning schedule can be maintained without excessive cost or effort.

Once marine growth on a net takes over it can damage the net and is typically difficult and time consuming to remove. Once excessive marine growth occurs, replacement of the net can be very difficult. For example, on a 240m diameter net, growth of around 100 tonnes can accumulate, making it very difficult to safely handle and dispose of the net as it would need to be cut into sections for replacement. Also, replacement of the net can be very expensive, disturb the fish, and can create opportunity for the fish to escape or predators to enter the pen.

Previous net cleaners have employed high pressure water jets to dislodge marine growth and debris from the nets, though this has been only partially effective and is generally time consuming. Also, water quality is reduced following cleaning and also providing a stream of high-pressure water is energy intensive.

There is a need to address the above, and/or at least provide a useful alternative.

Further net cleaning devices comprising one or more propellers for urging the net cleaning device against a net to be cleaned may be found in WO93/00175A1, WO2018/080315A1, and WO2016/183274A1.

### Summary

Embodiments of the invention are provided in accordance with the appended claims.

According to one aspect of the present invention there is provided a net cleaning device for in-situ cleaning of a submerged net, comprising the features of independent claim 1.

Preferably, at the propellers can have a cowl that rotates with a respective propeller, the cowl having circumferential teeth extending outwardly therefrom parallel to a longitudinal axis of the propeller, the teeth configured to shake the net in use and dislodge matter therefrom.

According to the invention, on at least one of the propellers, the said rotating blades are secured to a leading edge of the propeller blades.

Alternating propellers may be counter rotating. The propellers can be driven by hydraulic motors.

In some embodiments, the device includes a track drive system having a driven track at either end thereof, the tracks being independently operable to drive the device. Each track can be driven by a hydraulic motor.

The device can further include a remote-control system for remotely driving the device.

Preferably, the device further comprises buoyancy modules so that the device has generally zero buoyancy. The device can include visibility cameras at either side thereof.

In another aspect of the invention there is provided a method of cleaning an in-situ submerged net, according to claim 7, including the steps of:
providing a device of the above described type; and
moving the device over a surface of the net to dislodge debris from the net.

Preferably, the device is lowered and raised from within the net to clean a vertical path on the net and then advanced to clean an adjacent vertical path, wherein the process is repeated until the entire net has been cleaned.

Preferably, the net is a salmon pen.

In another aspect of the invention there is provided a system for cleaning a submerged net in-situ, according to claim 9, including a device of the above described type, a boat, and a hydraulic drive system in the boat for driving the propellers.

According to another aspect of the invention there is provided a propeller for use with a net cleaning device for in-situ cleaning of a submerged net, comprising the features of independent claim 10.

According to a preferred embodiment, the propeller further comprises a surround extending around the propeller, the surround being fixed to a tip of each propeller blade. Preferably, the surround further comprises a plurality of teeth extending therefrom in a direction parallel to a longitudinal axis of the propeller, the teeth configured to shake the net in use and dislodge matter therefrom. The propeller blades may have a curvature that varies along their length. The pitch of the propeller blades may decrease as the blades extend away from the hub. The length of the propeller blades may increase as the blades extend away from the hub.

Preferably, the cleaning blades are secured to the propeller blades with removable fasteners. Preferably, the teeth are secured to the propeller blades with removable fasteners.

The cleaning blades and teeth are preferably formed of stainless steel. Preferably, the propeller blades, hub and surround are formed of aluminium.

### Brief description of the drawings

In order that the invention may be more easily understood, an embodiment will now be described, by way of example only, with reference to the accompanying drawings, in which:
- Figure 1:: is a front view of the device according to a preferred embodiment of the invention;
- Figure 2:: is a rear view of the device;
- Figures 3a to 3e:: are respective front and rear perspective, front, side and rear views of a propeller assembly of the device;
- Figure 4:: is a side view of the device;
- Figure 5:: is a side sectional view of the device;
- Figure 6:: is a side, partially sectional, view of a propeller and drive assembly of the device;
- Figure 7:: is a close view of a hydraulic drive motor seal of the drive assembly;
- Figure 8:: is a perspective view of the cable reel and a hydraulic power unit for use with the device;
- Figure 9:: is a side view of the reel;
- Figure 10:: is a sectional side view of the cable reel of Figure 8;
- Figure 11:: is a plan view of a device according to a second embodiment of the invention;
- Figure 12:: is a front view of the device of Figure 11;
- Figure 13:: is a rear view of the device of Figure 11;
- Figure 14:: is a side view of the device of Figure 11;
- Figure 15:: is an underneath view of the device of Figure 11;
- Figure 16:: is a side sectional view of the device of Figure 11, the section taken through one of the propellers;
- Figure 17:: is a side sectional view of the device of Figure 11, the section taken through one of the tracks;
- Figure 18:: is a sectional view of the track of Figure 17;

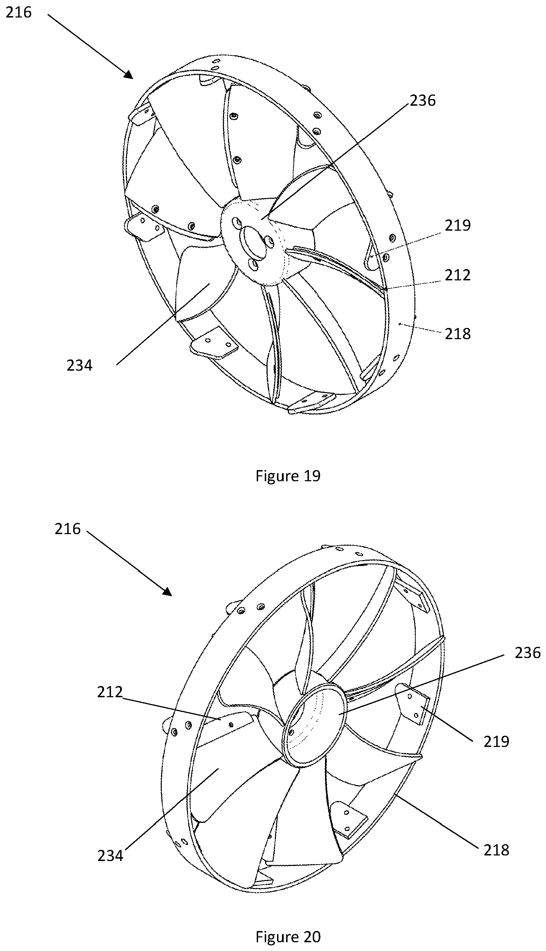

- Figure 19:: is a front perspective view of a propeller according to a preferred embodiment of the invention;
- Figure 20:: is a rear perspective view of the propeller;
- Figure 21:: is a front elevation of the propeller;
- Figure 22:: is a rear elevation of the propeller;
- Figure 23:: is a side elevation of the propeller;
- Figure 24:: is a side view of a tooth for use with the propeller;
- Figure 25:: is a front view of a cutting blade for use with the propeller; and
- Figure 26:: is a plan view of the cutting blade.

### Detailed description

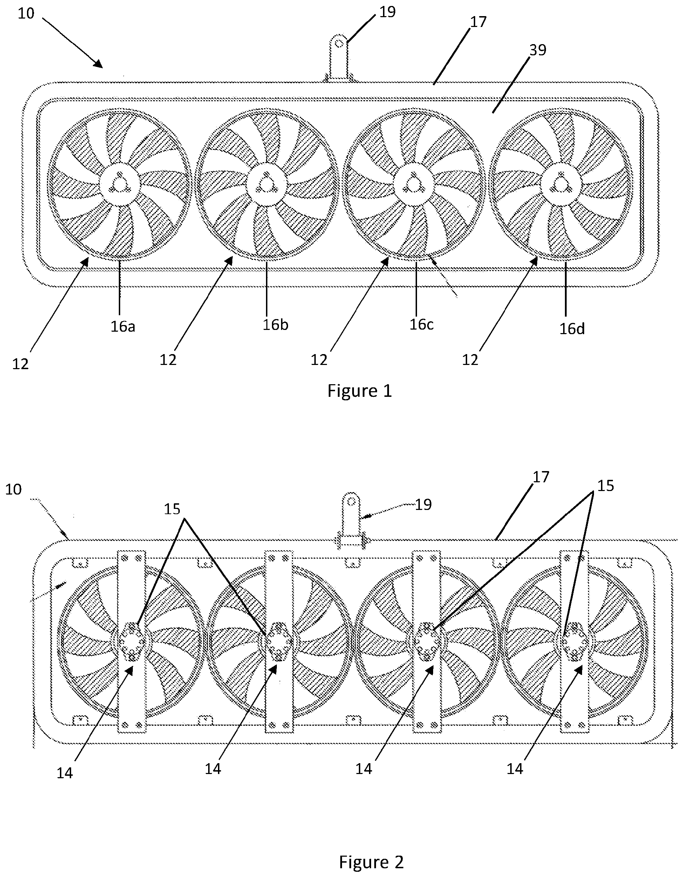

Figure 1 illustrates a device 10 according to a preferred embodiment of the invention. The device 10 is configured for in-situ cleaning of a submerged net such as the net of a salmon pen.

Device 10 includes a plurality of rotating blades 12 for removing debris and marine growth from the net and a propulsion system 14 (Figure 2) for urging the device against the net. In use, dragging the device 10 along the net dislodges the debris and marine growth to clean the net.

In the illustrated embodiments, the rotating blades and the propulsion system are combined. In this regard, the rotating blades 12 are fixed to propellers 16 that propel the device 10, though it will be appreciated that in other non claimed embodiments the blades and the propulsion system may be provided separately. In the illustrated embodiments, blades 12 are bolted to a leading edge of the propeller blades so as to contact the net in use. Blades 12 are also configured to be replaceable as they wear.

The rotating blades 12 are configured for scraping against the net to remove debris and marine growth from the net and the propulsion system 14 includes a plurality of propellers 16 for urging the device against the net and drawing dislodged material away from the net.

The propellers 16 are mounted within a support frame 17 and a face plate 39 is provided to close a space between each propeller and direct water flow through each propeller. A lifting handle 19 is provided to assist with manipulating the device 10 in use.

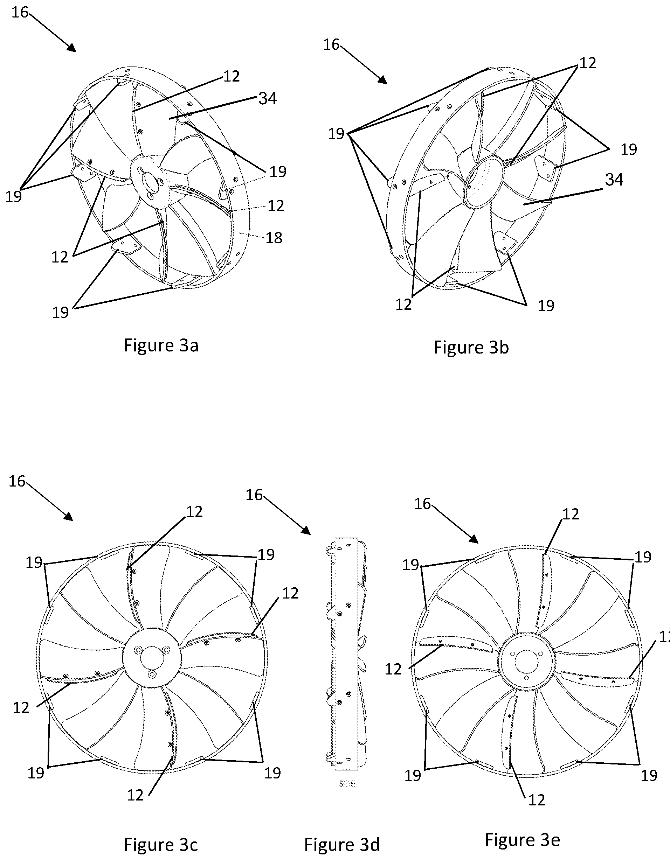

As illustrated in Figure 3, four rotating blades 12 are provided with each propeller 16, with each blade 12 being secured to a leading edge of a respective propeller blade 34. It will be appreciated that in other embodiments, arrangements with an equal number of rotating blades 12 and propeller blades 34 may be provided. Combining the rotating blades with the propellers, in addition to simplifying manufacturing, simplifies operation of the machine as the rotating blades 12 and propeller blades 34 work together to draw the device 10 against the net and dislodged marine growth to clean it at the same time.

Each blade 12 is preferably formed of stainless steel so as to be suitable for use in salt water and have sufficient hardness to resist wear.

To assist with removing large clumps of debris and marine growth, each of the propellers have a cowl 18 that rotates with the propellers 16. The cowl 18 has circumferential teeth 19 extending outwardly therefrom, the teeth 19 extending generally parallel to a longitudinal axis of the propeller 16. The teeth 19 are configured to smash clumps of marine growth on the net and also to shake the net and dislodge matter therefrom. In the illustrated embodiments, 8 teeth 19 are provided, with each tooth being disposed between a blade of the propeller 34, though it will be appreciated that less or more teeth 19, and propeller blades, may also be used.

Also, although in the illustrated embodiments each propeller 16 is shown with a cowl 18, it will be appreciated that in other, less desirable embodiments only one or two cowls 18 may be provided on the device 10.

The device 10 is provided with four propellers, 16a, 16b, 16c, 16d, which has proven to be a convenient size to use and power, though it will be appreciated the other devices having higher or lower numbers of propellers may similarly be used and would be considered to fall within the scope of the invention. Preferably, the propellers 16 are counter rotating, with two propellers operating in a clockwise manner and the other two operating counter-clockwise. It will be appreciated that the counter rotating propellers will be oppositely configured to those shown in Figures 3a to 3e to accommodate the different direction of rotation.

Powering a net cleaning device can be difficult due to the location of the nets and is typically limited to available power systems on the boat and their capacity. Previously, hydraulic power was considered unsuitable for marine applications due to sealing concerns, particularly for machinery which operates within the water.

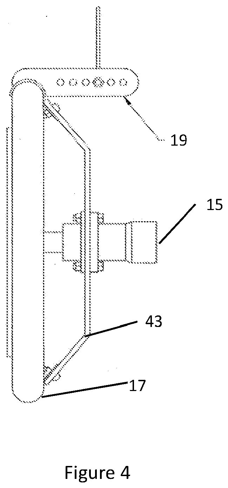

With device 10, the present propellers are each hydraulically driven by an individual hydraulic motor 15, as shown in Figures 4 to 6. Hydraulic power provides sufficient torque that can easily be varied to allow the device to operate effectively and reliably. In contrast, electric motors would struggle to provide sufficient torque and would likely burn out quickly.

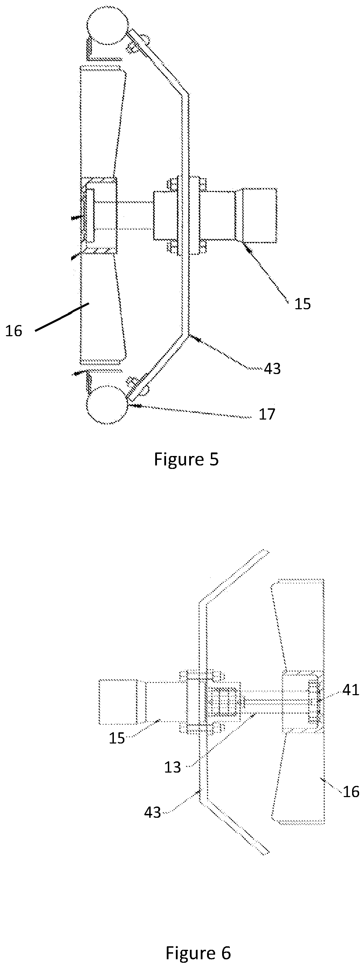

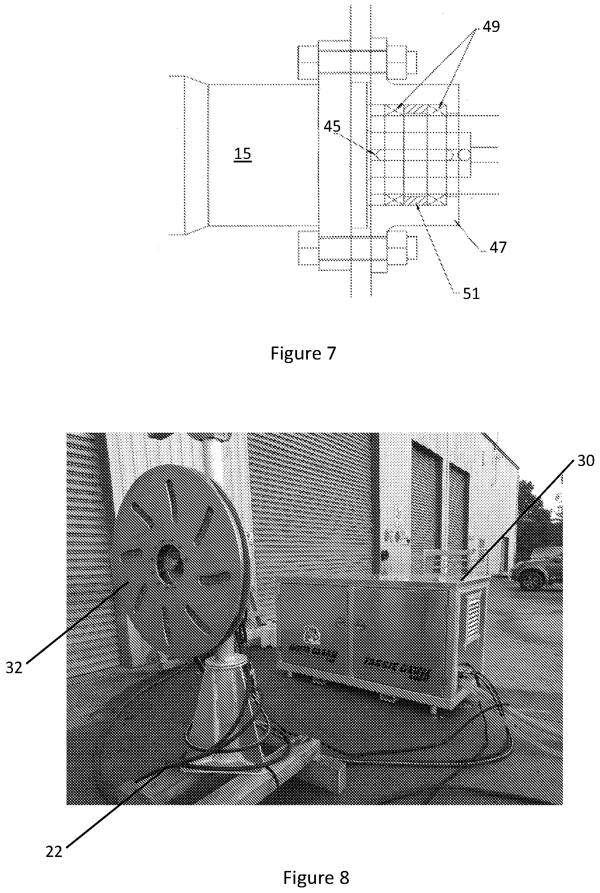

Figures 6 and 7 illustrate a propeller seal and drive assembly. Hydraulic motors have traditionally been unsuitable for use underwater and the illustrated seals are required to ensure longevity of the motors by resisting the intrusion of salt water into the motor through its seals. In contrast, typical seals for hydraulic machines are configured to prevent oil escaping from machinery.

Propeller 16 is driven via spindle 13 and secured thereto via cap bolt 41. Motor 15 is secured to spindle 13 via keyway 45 and secured to the device via motor mount bar 43. Motor 15 is mounted to one side of the motor mount bar 43 and secured on the other side via a housing 47. Within housing 47 is two seals 49 that are spaced apart via plastic spacer 51. The seals 49 are oppositely seated so as to face each other. The interface between the motor 15, the mount bar 43 and housing 47, are all sealed with a suitable flange seal, such at 515 Loctite. The illustrated configuration has proven to be effective in keeping salt water from the hydraulic motor so that their life cycle is greatly improved.

To power the device, a drive unit 30, as illustrated in Figure 8, is mounted on a service boat. The drive unit 30 includes a diesel motor coupled with two hydraulic pumps for supplying hydraulic power to the device 10. The drive unit 30 is configured to be portable for transferral between different support boats if required.

Extending from the drive unit 30 to the device 10 are hydraulic hoses 22. A reel 32 is provided to allow convenient extension and retraction of the hydraulic hoses 22 as the device 10 is lowered and raised in use. The reel 32 includes a hydraulic motor 20 and a worm drive gearbox 21. A mounting plate 23 may be provided for proximity sensors for sensing movement of the reel, the sensors reading through holes 25.

Hydraulic pressure is fed to the hoses 22 via pressure feed tube 27, which is coupled to drive shaft 31 via hydraulic rotary union 29, and then to inlet and outlet ports 33. The cables are wrapped over spacers 35 and between cheek plates 37.

The reel 32 may be programmed with a series of selectable programs that control the movement of the device 10. For example, one program may be heavy cleaning where the device 10 is slowly lowered so as to slowly pass over the net and spend a greater amount of time in contact with any section. In another program, lighter cleaning may be performed where the device 10 is more quickly moved over the net. In another program, the device 10 may move slowly over the first 3 or 4 meters below the surface, where marine growth can be highest, and then accelerate as lower portions may not require as much cleaning.

In practice, the device 10 is quite heavy and is lowered with the device 10 cleaning as it is lowered downwards and then winched back up towards the surface.

The hydraulic hoses connect to the device 10 at a distribution block, which then connects to each propeller 16. The distribution block allows that any one propeller 16 can become jammed and stop without causing the other propellers 16 to stop.

During use, the device 10 is dragged over an outside surface of the net to disclosed debris and marine growth from the net. In this regard, the device 10 is lowered and raised from within the net to clean a vertical path on the net. It will be appreciated that the net will generally take an inverted dome shape underneath the water, so that in cleaning the outside surface, propulsion from the device 10 is required to maintain contact with the net otherwise the device would simply fall from the net.

Raising the device 10 may be performed by winching. It may be that each path requires two passes to ensure that the net is clean. The device 10 is then advanced forwardly or rearwardly to clean an adjacent vertical path and the process is repeated until the entire net 20 has been cleaned. For a 240-metre diameter net, the cleaning process may take 6 to 8 hours and be repeated every 14 days. The boat may be coupled to an endless rope extending around the circumference of the net to facilitate and control forward/rearward movement.

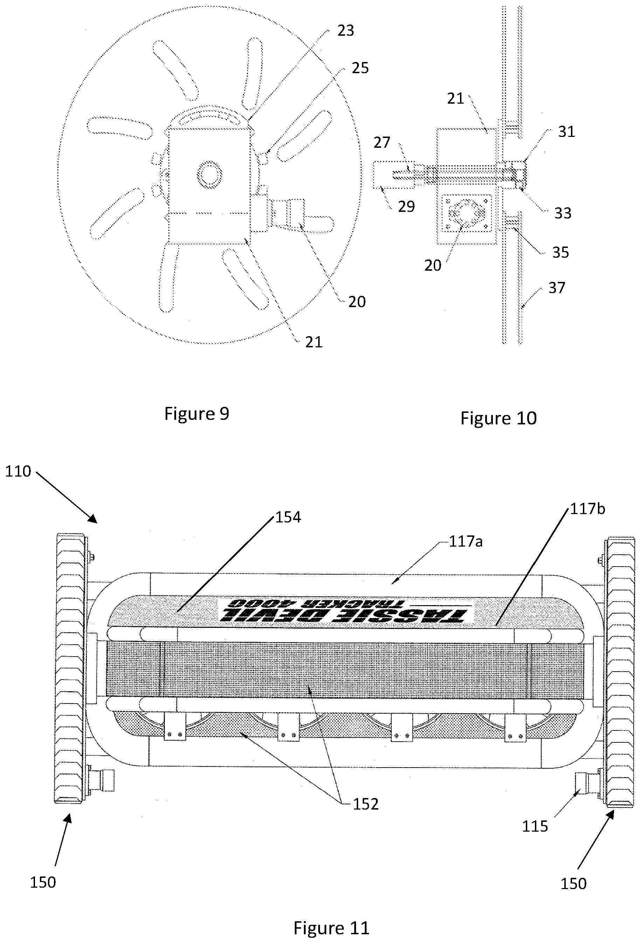

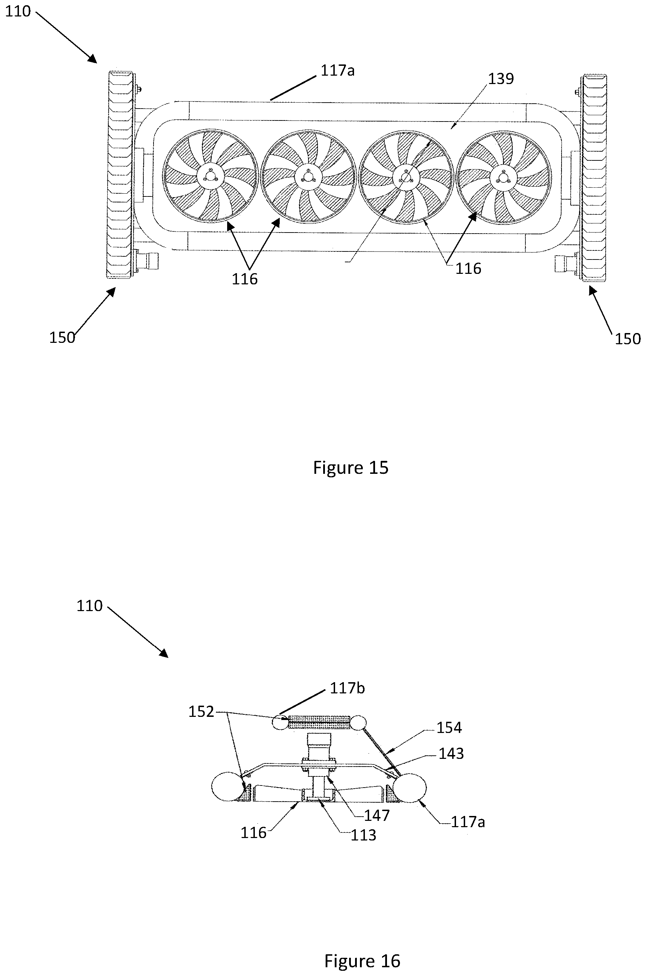

Figures 11 to 18 illustrate a device 110 according to another embodiment of the invention. The device 110 is also configured for in-situ cleaning of a submerged net such as the net of a salmon pen.

Device 110 shares many common components with device 10 and like numerals incremented by 100 have been used to identify equivalent components and the preceding description is intended to apply to those components.

In this regard, device 110 also has a plurality of rotating blades 112 for removing debris and marine growth from the net and a propulsion system 114 for urging the device against the net. Again, the rotating blades 112 and the propellers 116, which are again hydraulically driven, are fixed together, as illustrated in Figure 3, and the propellers 16 are mounted within a support frame 117.

Where device 110 differs from device 10 is that it uses tracks 150 to move itself along an inside surface of the net and it is remote controlled. Tracks 150 are also driven by hydraulic motors 115 to make use of the available power supply from the drive unit 130.

Device 110 is configured for zero or neutral buoyancy to allow it to be easily controlled and so that it can move up and down the net without requiring large amounts of power. To achieve this, support frame 117 is formed of hollow diameter stainless steel tubing and buoyancy modules 152 are also provided. The support frame 117 includes two parts, a lower part 117a which surrounds the propellers and an upper or rearward part 117b that protects a rear side of the propellers 116.

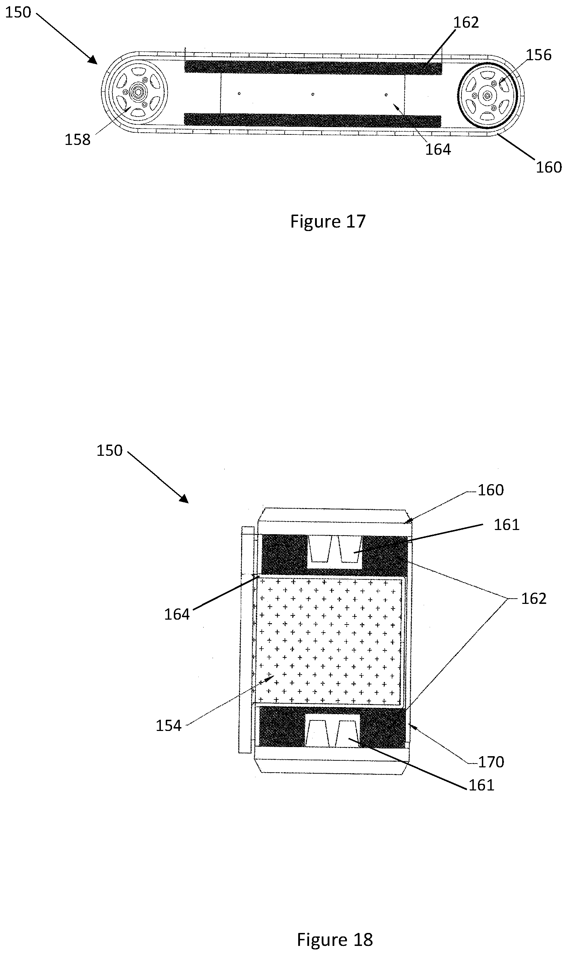

The buoyancy modules are provided in the rearward part 117b of the frame and also in a space between each propeller 116, behind face plate 139, where they may be formed of 75mm foam blocks. Buoyancy modules 152 may also be provided in a space between the tracks 150, as shown in Figure 18.

To remotely control the device 110, each of the tracks 150 are individually operable for forward and rearward motion via a remote control. Any suitable commercially available controller such as an Xbox controller for example may be used. To assist with movement of the device 110, cameras are provided so that areas that have already been cleaned or obstacles can be seen. Preferably, a camera is provided at either side of the device 10 so that no matter the direction of water flow and the debris coming off the net, visibility should still be possible.

Figures 17 and 18 illustrate the tracks 150 in more detail. At a rearward end of the device 110 is a drive pulley 156 driven by hydraulic motor 115. To obtain traction between the drive pulley 156 and an inside surface of the track 160, the pulley 156 is provided with a knurled finish, which allows for 180 degrees of frictional engagement between the pulley 156 and the track 160. At a forward end of the device 110, an idler pulley 158 is provided, around which the track 160 also extends. To guide the track 160, plastic guide rails 162 are provided, which are mounted on guide rail bracket 164. On an inner side of the track 160, rail 161 is formed, which runs within the guide rails 162. A buoyancy foam module 154 is provided in the available space within the track 150.

The track 160 is preferably a conventional rubber track, though it will be appreciated that if additional traction is required between the net and the device 110, studs or other traction aids may be installed in the track 160.

To prevent water intrusion into hydraulic motor or the idler puller 158, the above described seal system illustrated in Figures 6 and 7 is again used, i.e. a system having oppositely arranged seals mounted within a housing. A plastic cowl plate 170 is provided to protect the track and prevent large pieces of debris from entering.

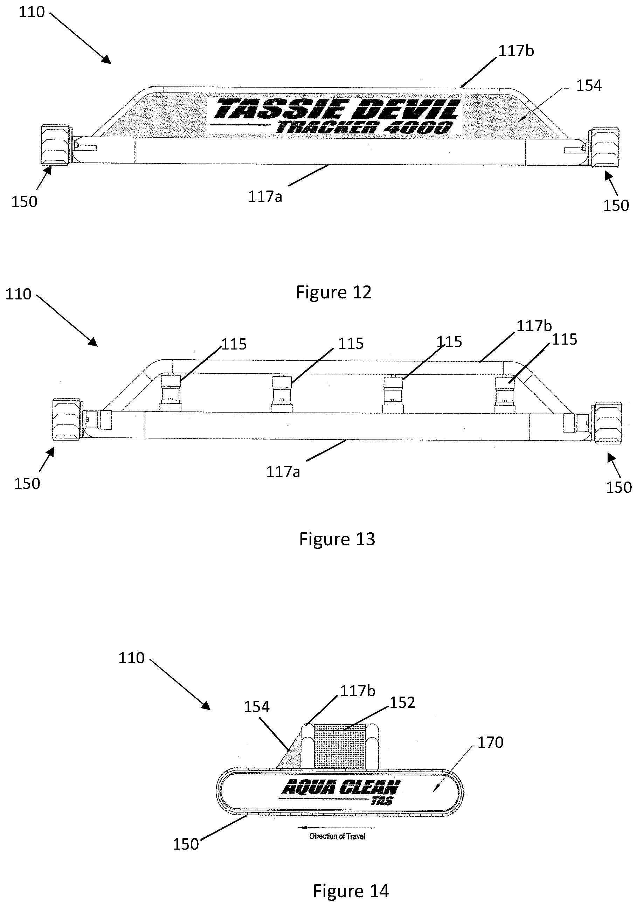

To protect the cameras and also to assist with directing water flow from the device 110, a plastic cowl 154, as shown in Figures 11 and 12 may be provided between the lower part 117a of the support frame and the upper part 117b. It will be appreciated that it may be desirable to collect the removed marine growth and means for doing so, such as a bag, collection hose or other collector device, may be provided on the device or be coupled to the device.

Another difference between device 10 and device 110 is that a cable reel is not required for device 110. In this regard, a length of hydraulic hose can be dragged behind the device as it is used, and this length collected when the device retrieved. Of course, a reel may be used for convenient storage of the hoses, though it is not essential.

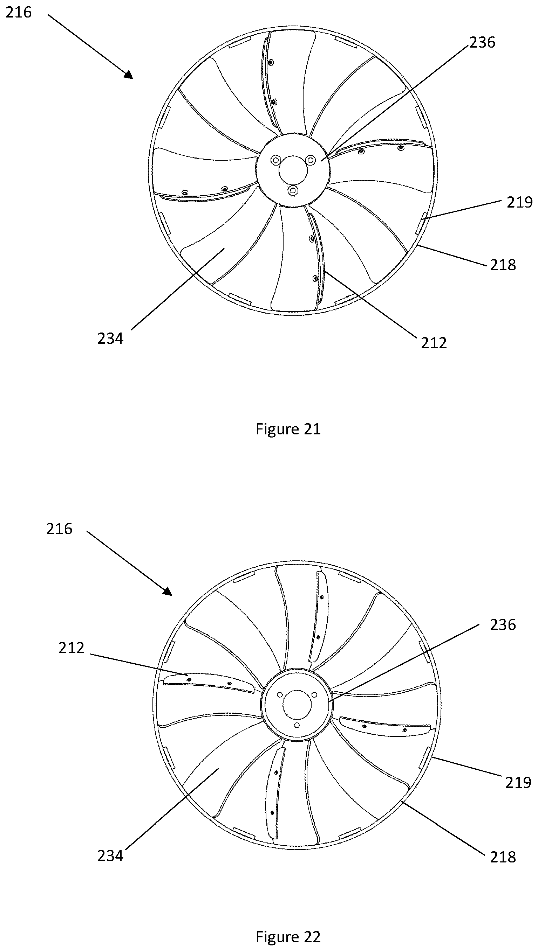

Figure 21 illustrates a propeller 216 according to another preferred embodiment of the invention. The propeller 216 is configured for use with a net cleaning device for in-situ cleaning of a submerged net, such as the net of a salmon farm for example.

Propeller 216 includes a plurality of propeller blades 234 extending radially outwardly from a hub 214 and configured for drawing water through the propeller 216 and propelling the net cleaning device forwardly in the water to effect cleaning. Drawing water through the propeller 216 also displaces marine growth as it is removed. In the illustrated embodiment, eight propeller blades 234 are provided, though those skilled in the art will appreciate that arrangements having more or less propeller blades may also be used.

The propeller 216 also includes a plurality of cleaning blades 212 fixed to respective propeller blades 234 and extending from the propeller 216 in an axial direction or in a direction parallel to a longitudinal axis of the propeller 216. In this regard, the cleaning blades 212 extend forwardly in a direction of fluid flow through the propeller so as to scrape against a net to be cleaned as the propeller 216 is urged against the net. The cleaning blades 212 are configured to extend along substantially the entire length of the leading edge. Although shown as a unitary piece, it will be appreciated that the cleaning blades 212 may be formed of multiple pieces

In the illustrated embodiments, four cleaning blades 212 are provided, though it will be appreciated that in other embodiments, a different number of cleaning blades will be provided. In this regard, eight cleaning blades may be used, i.e. one for each blade 234, or only one, two or three.

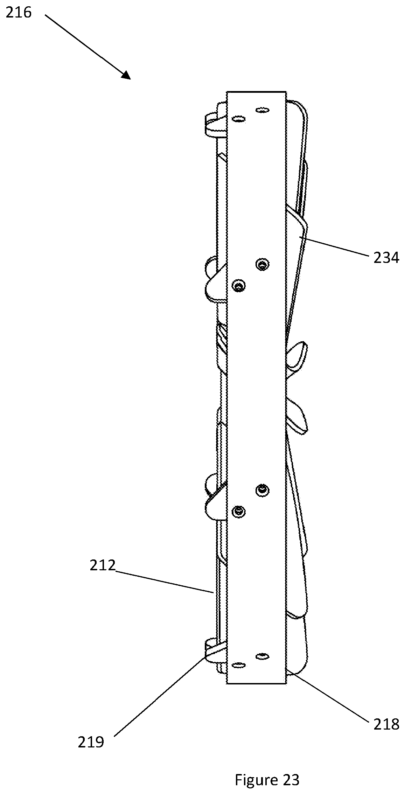

Propeller 216 also includes a surround 218 extending around the propeller 216 and fixed to a tip of each propeller blade 234. The surround 218 secures an otherwise free end of the blades 234 to provide increased strength to the propeller 216. The surround 218 has a plurality of teeth 219 extending therefrom in a direction parallel to a longitudinal axis of the propeller 216 so that as the propeller 216 is advanced toward a net, the teeth 219 contact the net. As can be seen in Figure 23, the teeth 219 sit proud of the blades 212 and are configured to shake the net in use and dislodge matter therefrom.

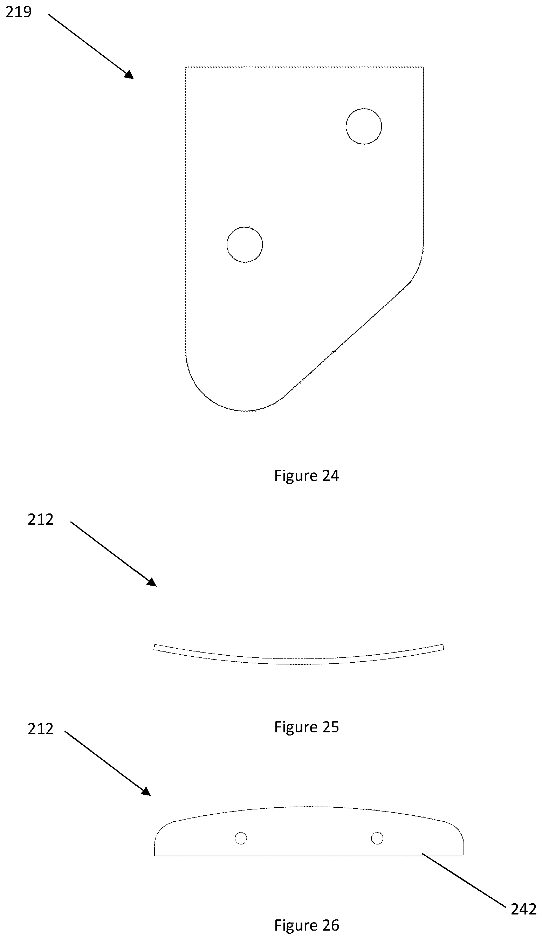

The teeth 219 are configured to smash clumps of marine growth on the net and also to shake the net and dislodge matter therefrom. In the illustrated embodiments, 8 teeth 219 are provided, with each tooth being disposed between a blade 234 of the propeller 216, though it will be appreciated that less or more teeth 219, and propeller blades 234, may also be used. Also, the tooth profile of Figure 24 has been chosen for simplicity of manufacture, though it will be appreciated that teeth with other profiles may also be used.

As can be seen in Figure 21, the cleaning blades 212 are fixed to a leading edge of the propeller blades 234 and extend forwardly therefrom. In other non claimed embodiments, the cleaning blades 212 may be fixed to another part of the propeller blades 234, such as the trailing edge or somewhere in between, or to another part of the propeller 216 such as the hub 236 or surround 218.

The propeller blades 234 have a curvature that varies along their length and a pitch that decreases as the blades extend away from the hub 236. In this regard, closer to the hub 236 the blades 234 are closer to parallel with a longitudinal axis of the propeller 216 than they are closer to the surround 218 where they have a greater angle to the longitudinal axis. Also, a length of the propeller blades 234 increases as the blades 234 extend away from the hub 236. Those skilled in the art will appreciate that the illustrated propeller 216 has been designed for optimal hydrodynamics and efficiency, though other more simplified propellers would also be possible and fall within the scope of the present disclosure.

The hub 236 is generally hollow and provided with holes to allow the propeller 216 to be secured to a driving motor, which is preferably a hydraulic motor. Although the illustrated hub 236 is provided with three holes, it will be appreciated that other embodiments having more or less holes may also be used.

The cleaning blades 212 have a profile which is complimentary with that of the propeller blades 234 to ensure a close fit. In this regard, from the front view of the cleaning blades 212 shown in Figure 25 it can be seen that the blades 212 are curved. A straight edge 242 is provided for scraping against the net, though scallops or serrations may also be formed on the edge 242.

The cleaning blades 212 are secured to the propeller blades 234 with removable fasteners and the teeth 219 are secured to the surround 218 with removable fasteners. In this regard, both the cleaning blades 212 and the propeller blades 234 are formed with holes through which fasteners can be inserted. The fasteners may be any commercially available fasteners, in particular threaded fasteners or rivets.

It will be appreciated that the cleaning blades 212 and teeth 219 are both prone to wear and will require periodic replacement. To provide wear resistance, the blades 212 and teeth 219 are preferably formed of stainless steel, though other materials of sufficient hardness may be used. Also, these parts may be coated with a wear resistant material. For ease of manufacture and light weight the propeller blades 234 hub 236 and surround 218 are formed of aluminium. Assembly of the propeller 216 is performed by welding the blades 234 to the hub 236 and surround 218 to form an integral unit.

In the illustrated embodiments, the propeller 216 is configured for clockwise rotation. It will be appreciated that the propeller may also be configured for counter clockwise rotation and be generally opposite or a mirror image of the illustrated propeller 216.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

## Claims

1. A net cleaning device (10, 110) for in-situ cleaning of a submerged net, comprising:
a plurality of cleaning blades (12, 212) for scraping the net to remove debris and marine growth therefrom; and
a propulsion system (14, 114) for urging the device (10, 110) against the net, the propulsion system (14, 114) including a plurality of propellers (16, 116, 216) for urging the device (10, 110) against the net and drawing dislodged material away from the net, wherein each cleaning blade (12, 212) is secured to a respective leading edge of respective propeller blades (34, 234) of at least one of the propellers (16, 116, 216), and wherein moving the device (10, 110) across a surface of the net dislodges the debris to clean the net.

2. A net cleaning device (10, 110) according to claim 1, wherein at least one of the propellers (16, 116, 216) has a cowl (18, 218) that rotates with a respective propeller (16, 116, 216), the cowl (18, 218) having circumferential teeth (19) extending outwardly therefrom parallel to a longitudinal axis of the propeller (16, 116, 216), the teeth (19) configured to shake the net in use and dislodge matter therefrom.

3. A net cleaning device (10, 110) according to claim 1 or 2, wherein the propellers (16, 116, 216) are counter rotating.

4. A net cleaning device (10, 110) according to any preceding claim, wherein the propellers (16, 116, 216) are driven by hydraulic motors (15, 115).

5. A net cleaning device (10, 110) according to any preceding claim, comprising a track drive system having a driven track (150) at either end thereof, the tracks (150) being independently operable to drive the device (10, 110).

6. A net cleaning device (10, 110) according to claim 5, further comprising buoyancy modules (152) so that the device (10, 110) has generally zero buoyancy.

7. A method of cleaning an in-situ submerged net, including the steps of:
providing a device (10, 110) according to any preceding claim; and
moving the device (10, 110) over a surface of the net to dislodge debris from the net.

8. A method according to claim 7, wherein the device (10, 110) is lowered and raised from within the net to clean a vertical path on the net and then advanced to clean an adjacent vertical path, wherein the process is repeated until the entire net has been cleaned.

9. A system for cleaning a submerged net in-situ, including a device (10, 110) according to claim 4, a boat, and a hydraulic drive system in the boat for driving the propellers (16, 116, 216).

10. A propeller (16, 116, 216) for use with a net cleaning device (10, 110) for in-situ cleaning of a submerged net, comprising:
a plurality of propeller blades (34, 234) extending radially outwardly from a hub (236) and configured for drawing water through the propeller (16, 116, 216); and
a plurality of cleaning blades (12, 212), each cleaning blade (12, 212) being fixed to a respective leading edge of respective propeller blades (34, 234) and extending from the propeller (16, 116, 216), the cleaning blades (12, 212) being configured, in use, for scraping against a net to be cleaned to dislodge marine growth therefrom.

11. A propeller (16, 116, 216) according to claim 11, further comprising a surround (18, 218) extending around the propeller (16, 116, 216), the surround (18, 218) being fixed to a tip of each propeller blade (34, 234).

12. A propeller (16, 116, 216) according to claim 11, wherein the surround (18, 218) further comprises a plurality of teeth (19, 219) extending therefrom in a direction parallel to a longitudinal axis of the propeller (16, 116, 216), the teeth (19, 219) configured to shake the net in use and dislodge matter therefrom.

## Patentansprüche

1. Eine Netzreinigungsvorrichtung (10, 110) zur In-situ-Reinigung eines untergetauchten Netzes, umfassend:
eine Vielzahl von Reinigungsklingen (12, 212) zum Abkratzen des Netzes, um Schmutz und Meeresbewuchs davon zu entfernen; und
ein Antriebssystem (14, 114) zum Drücken der Vorrichtung (10, 110) gegen das Netz, wobei das Antriebssystem (14, 114) eine Vielzahl von Propellern (16, 116, 216) zum Drücken der Vorrichtung (10, 110) gegen das Netz und zum Abziehen von gelöstem Material vom Netz aufweist, wobei jede Reinigungsklinge (12, 212) an einer jeweiligen Vorderkante von jeweiligen Propellerblättern (34, 234) von mindestens einem der Propeller (16, 116, 216) befestigt ist, und wobei das Bewegen der Vorrichtung (10, 110) über eine Oberfläche des Netzes den Schmutz löst, um das Netz zu reinigen.

2. Eine Netzreinigungsvorrichtung (10, 110) nach Anspruch 1, wobei mindestens einer der Propeller (16, 116, 216) eine Haube (18, 218) aufweist, die sich mit einem jeweiligen Propeller (16, 116, 216) dreht, wobei die Haube (18, 218) umlaufende Zähne (19) aufweist, die sich von ihr nach außen parallel zu einer Längsachse des Propellers (16, 116, 216) erstrecken, wobei die Zähne (19) so konfiguriert sind, dass sie im Gebrauch das Netz schütteln und Material davon lösen.

3. Eine Netzreinigungsvorrichtung (10, 110) nach Anspruch 1 oder 2, wobei die Propeller (16, 116, 216) gegenläufig sind.

4. Eine Netzreinigungsvorrichtung (10, 110) nach einem der vorhergehenden Ansprüche, wobei die Propeller (16, 116, 216) von Hydraulikmotoren (15, 115) angetrieben werden.

5. Eine Netzreinigungsvorrichtung (10, 110) nach einem der vorhergehenden Ansprüche, umfassend ein Raupenantriebssystem mit einer angetriebenen Raupe (150) an jedem Ende davon, wobei die Raupen (150) unabhängig voneinander betreibbar sind, um die Vorrichtung (10, 110) anzutreiben.

6. Eine Netzreinigungsvorrichtung (10, 110) nach Anspruch 5, ferner umfassend Auftriebsmodule (152), so dass die Vorrichtung (10, 110) im Allgemeinen einen neutralen Auftrieb aufweist.

7. Ein Verfahren zur In-situ-Reinigung eines untergetauchten Netzes, das die folgenden Schritte beinhaltet:
Bereitstellen einer Vorrichtung (10, 110) nach einem der vorhergehenden Ansprüche; und
Bewegen der Vorrichtung (10, 110) über eine Oberfläche des Netzes, um Schmutz vom Netz zu lösen.

8. Ein Verfahren nach Anspruch 7, wobei die Vorrichtung (10, 110) vom Inneren des Netzes aus abgesenkt und angehoben wird, um einen vertikalen Pfad auf dem Netz zu reinigen, und dann weiterbewegt wird, um einen benachbarten vertikalen Pfad zu reinigen, wobei der Vorgang wiederholt wird, bis das gesamte Netz gereinigt ist.

9. Ein System zur In-situ-Reinigung eines untergetauchten Netzes, umfassend eine Vorrichtung (10, 110) nach Anspruch 4, ein Boot und ein hydraulisches Antriebssystem im Boot zum Antreiben der Propeller (16, 116, 216).

10. Ein Propeller (16, 116, 216) zur Verwendung mit einer Netzreinigungsvorrichtung (10, 110) zur In-situ-Reinigung eines untergetauchten Netzes, umfassend:
eine Vielzahl von Propellerblättern (34, 234), die sich von einer Nabe (236) radial nach außen erstrecken und so konfiguriert sind, dass sie Wasser durch den Propeller (16, 116, 216) ziehen; und
eine Vielzahl von Reinigungsklingen (12, 212), wobei jede Reinigungsklinge (12, 212) an einer jeweiligen Vorderkante von jeweiligen Propellerblättern (34, 234) befestigt ist und sich vom Propeller (16, 116, 216) erstreckt, wobei die Reinigungsklingen (12, 212) so konfiguriert sind, dass sie im Gebrauch gegen ein zu reinigendes Netz kratzen, um Meeresbewuchs davon zu lösen.

11. Ein Propeller (16, 116, 216) nach Anspruch 11, ferner umfassend eine Ummantelung (18, 218), die sich um den Propeller (16, 116, 216) erstreckt, wobei die Ummantelung (18, 218) an einer Spitze jedes Propellerblattes (34, 234) befestigt ist.

12. Ein Propeller (16, 116, 216) nach Anspruch 11, wobei die Ummantelung (18, 218) ferner eine Vielzahl von Zähnen (19, 219) umfasst, die sich von ihr in einer Richtung parallel zu einer Längsachse des Propellers (16, 116, 216) erstrecken, wobei die Zähne (19, 219) so konfiguriert sind, dass sie im Gebrauch das Netz schütteln und Material davon lösen.

## Revendications

1. - Dispositif de nettoyage de filet (10, 110) pour le nettoyage in situ d'un filet immergé, comprenant :
une pluralité de lames de nettoyage (12, 212) pour racler le filet afin d'en retirer les débris et les salissures marines ; et
un système de propulsion (14, 114) pour solliciter le dispositif (10, 110) contre le filet, le système de propulsion (14, 114) comprenant une pluralité d'hélices (16, 116, 216) pour solliciter le dispositif (10, 110) contre le filet et retirer du filet les matériaux délogés, chaque lame de nettoyage (12, 212) étant fixée à un bord d'attaque respectif de pales d'hélice respectives (34, 234) d'au moins l'une des hélices (16, 116, 216), et le déplacement du dispositif (10, 110) à travers une surface du filet délogeant les débris pour nettoyer le filet.

2. - Dispositif de nettoyage de filet (10, 110) selon la revendication 1, dans lequel au moins l'une des hélices (16, 116, 216) a un capot (18, 218) qui tourne avec une hélice respective (16, 116, 216), le capot (18, 218) ayant des dents périphériques (19) s'étendant vers l'extérieur de celui-ci parallèlement à un axe longitudinal de l'hélice (16, 116, 216), les dents (19) étant configurées pour secouer le filet en cours d'utilisation et en déloger les matières.

3. - Dispositif de nettoyage de filet (10, 110) selon la revendication 1 ou 2, dans lequel les hélices (16, 116, 216) sont contrarotatives.

4. - Dispositif de nettoyage de filet (10, 110) selon l'une quelconque des revendications précédentes, dans lequel les hélices (16, 116, 216) sont entraînées par des moteurs hydrauliques (15, 115).

5. - Dispositif de nettoyage de filet (10, 110) selon l'une quelconque des revendications précédentes, comprenant un système d'entraînement à chenilles ayant une chenille entraînée (150) à l'une ou l'autre de ses extrémités, les chenilles (150) étant actionnables indépendamment pour entraîner le dispositif (10, 110).

6. - Dispositif de nettoyage de filet (10, 110) selon la revendication 5, comprenant en outre des modules de flottabilité (152) de telle sorte que le dispositif (10, 110) a une flottabilité généralement nulle.

7. - Procédé de nettoyage in situ d'un filet immergé, comprenant les étapes consistant à :
fournir un dispositif (10, 110) selon l'une quelconque des revendications précédentes ; et
déplacer le dispositif (10, 110) sur une surface du filet pour déloger les débris à partir du filet.

8. - Procédé selon la revendication 7, dans lequel le dispositif (10, 110) est abaissé et relevé à partir de l'intérieur du filet pour nettoyer un chemin vertical sur le filet, puis est avancé pour nettoyer un chemin vertical adjacent, le processus étant répété jusqu'à ce que le filet entier ait été nettoyé.

9. - Système de nettoyage in situ d'un filet immergé, comprenant un dispositif (10, 110) selon la revendication 4, un bateau et un système d'entraînement hydraulique dans le bateau pour entraîner les hélices (16, 116, 216).

10. - Hélice (16, 116, 216) destinée à être utilisée avec un dispositif de nettoyage de filet (10, 110) pour le nettoyage in-situ d'un filet immergé, comprenant :
une pluralité de pales d'hélice (34, 234) s'étendant radialement vers l'extérieur à partir d'un moyeu (236) et configurées pour aspirer l'eau à travers l'hélice (16, 116, 216) ; et
une pluralité de lames de nettoyage (12, 212), chaque lame de nettoyage (12, 212) étant fixée à un bord d'attaque respectif des pales d'hélice respectives (34, 234) et s'étendant à partir de l'hélice (16, 116, 216), les lames de nettoyage (12, 212) étant configurées pour, en cours d'utilisation, racler contre un filet à nettoyer afin d'en déloger les salissures marines.

11. - Hélice (16, 116, 216) selon la revendication 10, comprenant en outre un entourage (18, 218) s'étendant autour de l'hélice (16, 116, 216), l'entourage (18, 218) étant fixé à une extrémité de chaque pale d'hélice (34, 234) .

12. - Hélice (16, 116, 216) selon la revendication 11, dans laquelle l'entourage (18, 218) comprend en outre une pluralité de dents (19, 219) s'étendant à partir de celui-ci dans une direction parallèle à un axe longitudinal de l'hélice (16, 116, 216), les dents (19, 219) étant configurées pour secouer le filet en cours d'utilisation et en déloger les matières.
